(19) Europäisches Patentamt
European Patent Office
Office européen des brevets

(11) Publication number: 0 214 850 A2

(12) # EUROPEAN PATENT APPLICATION

(21) Application number: 86306872.2

(51) Int. Cl.⁴: C 02 F 1/50

(22) Date of filing: 05.09.86

(30) Priority: 06.09.85 US 773224

(43) Date of publication of application:
18.03.87 Bulletin 87/12

(84) Designated Contracting States:
BE DE FR GB IT NL

(71) Applicant: BUCKMAN LABORATORIES, INC.
1256 North McLean Boulevard
Memphis Tennessee 38108(US)

(72) Inventor: Pera, John Dominic
8838 Eatonwick Fairway
Cordova Tennessee 38018(US)

(72) Inventor: Fenyes, Joseph G.E.
1827 Oakhill Cove
germantown Tennessee 38138(US)

(74) Representative: Watkins, Arnold Jack et al,
European Patent Attorney Frank B. Dehn & Co. Imperial
House 15-19 Kingsway
London WC2B 6UZ(GB)

(54) **Method for the control of algae in aqueous systems.**

(57) A method of inhibiting the growth and/or proliferation of algae in an aqueous system which comprises incorporating in the system an effective amount of a poly[oxyethylene-(dialkylimino)hydroxypropylene-(dialkylimino)ethylene dichloride] polymer having the formula:

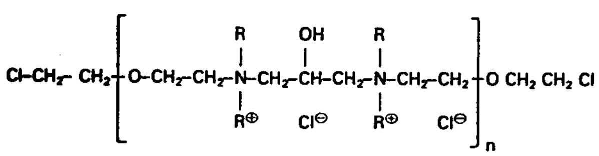

wherein R is alkyl, the R groups being the same or different, but preferably being the same and most preferably methyl, and n is an integer in the range of about 4 to about 40.

EP 0 214 850 A2

16Q 50 832

# Method for the control of algae in aqueous systems

The present invention relates to a method of inhibiting the growth and/or proliferation of algae and, more particularly, to the use of poly-[oxyethylene(dialkylimino)hydroxypropylene(dialkylimino)-ethylene dichloride] polymers for the control of algae in aqueous system, such as for example swimming pools, holding ponds and cooling towers.

Unfortunately, various aqueous systems, such as those found in cooling towers, swimming pools and holding ponds, provide almost ideal conditions for the rapid growth of algae. The presence of such algae, however, is highly undesirable for a number of reasons. In some aqueous systems, the algae clog and inhibit the flow of the aqueous system and, thereby, reduce the operating efficiency of the system. In other aqueous systems, such as swimming pools, the rapid reproduction of algae is objectionable not only for aesthetic reasons, but also because the algae pose an unsanitary condition in the swimming pool.

Consequently, it is highly desirable to use an algicide in such aqueous systems to inhibit or control the growth of the algae. By using an algicide, the safe and efficient use of the aqueous system can be dramatically enhanced.

However, the selection of an appropriate algicide is extremely important because not only must the algicide be effective in inhibiting or controlling the growth of the algae, but it must also be substantially nonfoaming and substantially nontoxic and nonirritating to warm blooded animals. If the algicide foams when added to an aqueous system, undesirable side effects, such as reduced

flow rate and clogging, can occur. Likewise, if the algicide is toxic and irritating to warm blooded animals, such as e.g. man, dogs, cats, and fowl, the algicide has extremely limited uses because it cannot be used in an aqueous system, such as a swimming pool, with which warm blooded animals will be in contact. Therefore, the algicide must be an effective killer of the algae present in the aqueous system without being toxic or irritating to users of the aqueous system.

Various algicides for aqueous systems are already known in the art. For example, U.S. Patent No. 3,771,989 to Pera et al discloses a poly[oxyethylene-(dimethyliminio)ethylene(dimethyliminio)ethylene dichloride] for use in inhibiting the growth of algae in an aqueous system. Likewise, U.S. Patent 4,018,592 to Buckman et at discloses poly[2-hydroxyethylene-(dimethylimino)-ethylene-(dimethylimino)methylene chloride] for use in an aqueous system to inhibit growth of algae. Nevertheless, there is still a need for other algicides that are effective without foaming or being irritating or toxic.

The present invention is based on the discovery that algae growth and/or proliferation may be inhibited by use of polymers that have previously not been recognized to be effective algicides for aqueous systems. The polymers used in the present invention provide various highly desirable qualities for use as algicides in aqueous systems, such as being nonfoaming, as well as nonirritating and nontoxic to the users of the aqueous system.

More specifically, the present invention is directed to a method of inhibiting the growth and/or proliferation of algae in an aqueous system which comprises incorporating in the system an effective amount of a poly[oxyethylene(dialkylimino)-hydroxypropylene(dialkylimino)ethylene dichloride] polymer having the formula:

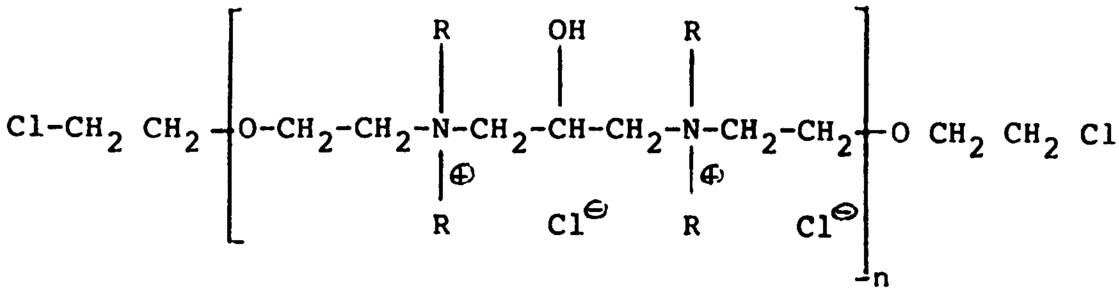

In the above formula, R is alkyl (e.g. $C_{1-3}$ alkyl), the R groups being the same or different, and n is an integer in the range of about 4 to about 40. Preferably the R groups will be the same and most preferably will be methyl in which case the polymer will be a poly[oxyethylene(dimethylimino)-hydroxypropylene(dimethylimino)ethylene dichloride] polymer having the formula:

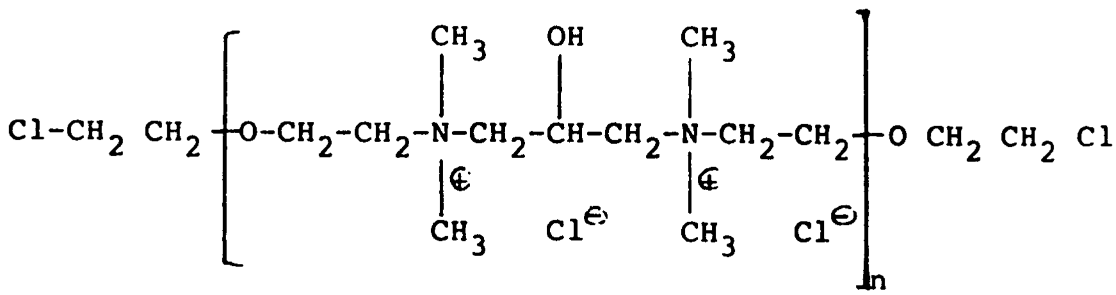

wherein n is an integer varying from about 4 to about 40, which polymer is denoted hereinafter "the methyl polymer".

In accordance with the method of the present invention, the polymer is present in the aqueous system in an amount effective to inhibit the growth and/or proliferation of the algae.

For the methyl polymer, when n is in the range of about 4 to about 40 the molecular weight of the polymer is in the range of about 1,000 to 10,000. Preferred such methyl polymers are those having a molecular weight in the range of 3,000 to 7,000, which corresponds to an n value of about 12 to about 28, most preferred being methyl polymers

having a molecular weight in the range of about 4,000 to about 6,000, which corresponds to an n value of about 16 to 24.

The polymers used in accordance with the present invention are effective algicides especially for use in aqueous systems, such as cooling towers, swimming pools and holding ponds. Although one skilled in the art could readily determine what an effective amount of the polymer is for a particular aqueous system, suitable quantities typically varying from about 0.1 part to about 100 parts polymer per million parts of the aqueous system. A particularly preferred amount is 0.2 part to about 20 parts polymer per million parts of the aqueous system. It will be readily understood, of course, that larger quantities of the polymer may be used with no detrimental effect, but such larger quantities usually increase the cost of operation with limited material benefit.

Although the polymers are effective algicides in inhibiting the growth of a broad range of algae, the methyl polymer is especially effective in inhibiting the growth of Chlorella pyrenoidosa, Phormidium inundatum, Chlorococcum hyponsporum, Oscilliatoria prolifera and Volvox carterii.

Because the polymers used in accordance with the present invention are polyelectrolytes, they are not only effective algicides but are also substantially nonfoaming, nonirritating and nontoxic. As a result, the polymers can be used in aqueous systems, such as cooling towers, holding ponds and swimming pools, without causing harmful side effects to warm blooded animals, such as man, dogs, cats and fowl.

The polymers used according to the invention may be made by methods well known in the art. In one method of making the polymers approximately

equimolar quantities of the appropriate 1,3-bis(dialkyl-amino)-2-hydroxypropane, (e.g. 1,3-bis(dimethylamino)-2-hydroxypropane) and bis(2-chloroethyl)ether are reacted. The methyl polymers prepared by such a reaction have a molecular weight varying from about 1,000 to about 10,000. A preferred method of preparing methyl polymers is described in Example 1 below. Of course, the skilled artisan would also be able to make the polymers readily by other methods known in the art.

The following are illustrative examples describing the preparation of polymers and their use in accordance with the present invention. It is understood, however, that the invention is not to be limited to the specific conditions or details set forth in these examples.

EXAMPLE 1

Preparation of poly[oxyethylene(dimethylimino)-hydroxypropylene(dimethylimino)ethylene dichloride]

A one litre flask equipped with a mechanical agitator, condenser and thermometer was charged with 208.0 g of water, 190.6 g of 94.7% 1,3-bis(dimethyl-amino)-2-hydroxypropane (1.24 moles) and 181.5 g of 94.5% bis(2-chloroethyl)ether (1.20 moles). The contents of the flask were heated with stirring to boiling and held at reflux for 8 hours. The reflux condenser was then replaced with a distillation apparatus and 25 g of the reaction mixture were distilled to remove any unreacted starting materials along with water.

The reaction mixture was then cooled and the 25 g that had been removed were replaced by adding water to the mixture. The polymer content of the final product was 60.7%. The chloride content by analysis was 14.5% compared to a theoretical value of 14.6%. The Brookfield viscosity was 588 centipoises at 25°C and the reduced viscosity was 0.08 g per dl. The weight average molecular weight of this polymer was approximately 4,900.

Additional poly[oxyethylene(dimethyliminio)-hydroxypropylene(dimethylimino)ethylene dichloride] polymers were prepared having molecular weights varying from about 1,000 to about 10,000. These polymers were prepared by varying the experimental conditions such as solvents, temperature of reaction and concentrations of reactants in the reaction mixture. Of course, the skilled artisan would readily be able to make such a selection of conditions to form the desired polymer.

EXAMPLE 2

In Example 2, the effectiveness of the polymer of Example 1, hereafter designated polymer A, was tested against two algae, namely *Chlorella pyrenoidosa*

and Phormidium inundatum, in an aqueous system. For comparison purposes, the effectiveness of the polymer poly[oxyethylene(dimethylimino)ethylene(dimethylimino)ethylene dichloride] disclosed and claimed in U.S. Patent No. 3,771,989, hereinafter designated Polymer B, was determined at the same time under identical conditions.

Using the experimental procedure described in Example 2 of U.S. Patent No. 3,771,989, growth observations were made on the basis of the following key:

4 = Excellent
3 = Good
2 = Poor
1 = Very poor, scant, questionable
0 = No growth

The results of the growth observations are summarized in Table 1. Table 1 shows the inhibition of Chlorella pyrenoidosa and Phormidium inundatum by the Polymers A and B in Difco Algae broth after 28 days incubation.

TABLE 1

| Test organism | Concentration | Compounds tested | |
|---|---|---|---|
| | | Polymer A | Polymer B |
| | Parts per million | | |
| Chorella pyrenoidosa | 1 | 4 | 4 |
| | 2 | 4 | 3 |
| | 3 | 1 | 0 |
| | 4 | 0 | 0 |
| | 5 | 0 | 0 |
| Phormidium inundatum | 1 | 4 | 4 |
| | 2 | 1 | 3 |
| | 3 | 0 | 0 |
| | 4 | 0 | 0 |
| | 5 | 0 | 0 |

EXAMPLE 3

In this experiment, in solution no. 1, the amount of foam produced by a solution containing 100 p.p.m. of polymer A of Example 1 was determined. similarly, in solution no. 2 the amount of foam produced by a solution containing 100 p.p.m. of the active component of an algicide available commercially under the trademark Hyamine 3500, was determined. The product Hyamine 3500 consists of two components: 50% inert ingredients and 50% of the active component n-alkyl (10% $C_{10}$, 40% $C_{12}$ and 50% $C_{14}$) dimethylbenzyl-ammonium chloride. All percentages are by weight.

One hundred millilitres of each solution was agitated for a period of 15 seconds on a shaker, after which the foam height was measured.

The results of these tests are summarized in Table 2.

TABLE 2

Comparative foam-producing characteristics of the two algicides

| Solution | Foam Height Millimetres |
|---|---|
| 1 | 0 |
| 2 | 35 |

Consequently, as shown, Polymer A, exhibited no foaming. In comparison, Polymer B foamed to a height of 35 mm.

Claims:

1. A method of inhibiting the growth and/or proliferation of algae in an aqueous system which comprises incorporating in the system an effective amount of a poly[oxyethylene(dialkylimino)hydroxypropylene(dialkylimino)ethylene dichloride] polymer having the formula:

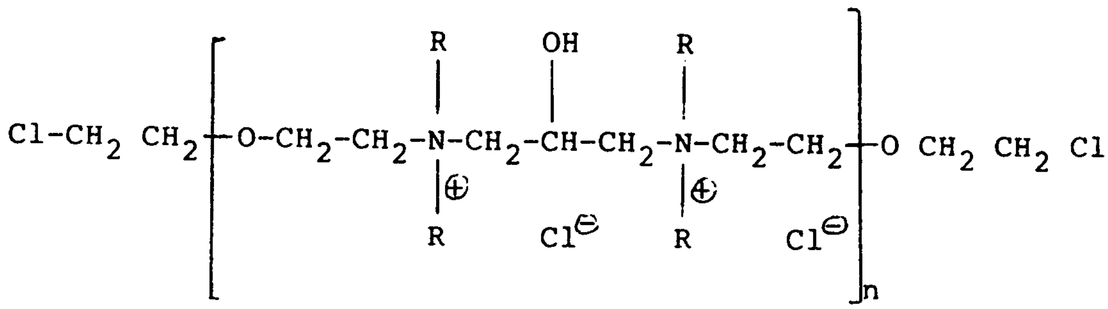

wherein R is alkyl, the R groups being the same or different, and n is an integer in the range of about 4 to about 40.

2. A method according to claim 1 wherein the R groups in the polymer are the same.

3. A method according to claim 2 wherein the polymer is a poly[oxyethylene(dimethylimino)hydroxypropylene(dimethylimino)ethylene dichloride] polymer having the formula

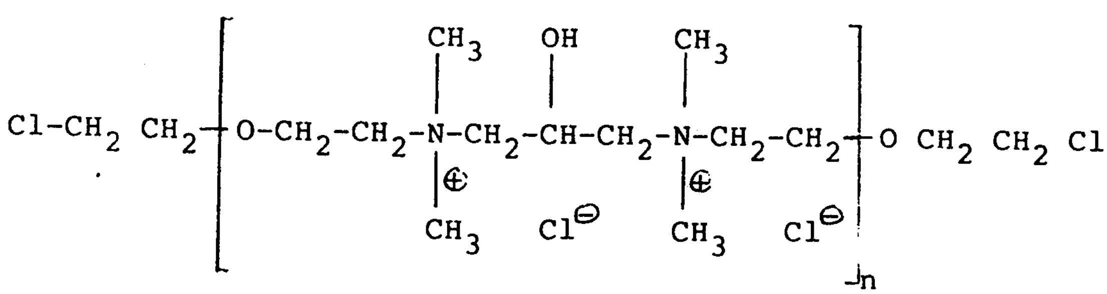

where n is as defined in claim 1.

4. A method according to claim 3 wherein the polymer has a molecular weight in the range of about 3,000 to about 7,000.

5. A method according to claim 4 wherein the polymer has a molecular weight in the range of about 4,000 to about 6,000.

6. A method according to any preceding claim wherein the aqueous system is a cooling tower, holding pond or swimming pool.

7. A method according to any preceding claim wherein the polymer is present in an amount of about 0.1 part to about 100 parts per million parts of the aqueous system.

8. A method according to claim 7 wherein the polymer is present in an amount of about 0.2 part to about 20 parts per million parts of the aqueous system.

9. A method according to any preceding claim wherein the algae to be inhibited is/are selected from Chlorella pyrenoidosa, Phormidium inundatum, Chlorococcum hyponsporum, Oscilliatoria prolifera and Volvox carterii.

10. An aqueous system, for example a cooling tower, holding pond or swimming pool, which includes an algicidally effective amount of a polymer as defined in any one of claims 1 to 5.